Europäisches Patentamt

European Patent Office

Office européen des brevets

(11) Veröffentlichungsnummer: **0 283 470**
**B1**

(12) EUROPÄISCHE PATENTSCHRIFT

(45) Veröffentlichungstag der Patentschrift: 04.04.90

(51) Int. Cl.⁵: **B 60 C 23/04**

(21) Anmeldenummer: 86905714.1

(22) Anmeldetag: **18.09.86**

(86) Internationale Anmeldenummer:
PCT/DE86/00374

(87) Internationale Veröffentlichungsnummer:
WO 87/03254 04.06.87 Gazette 87/12

(54) **VORRICHTUNG ZUR ÜBERTRAGUNG VON MESSIGNALEN, WIE Z.B. FÜR DEN REIFENDRUCK, AN ZWILLINGSRÄDERN VON KRAFTFAHRZEUGEN.**

(30) Priorität: 23.11.85 DE 3541529

(43) Veröffentlichungstag der Anmeldung:
28.09.88 Patentblatt 88/39

(45) Bekanntmachung des Hinweises auf die
Patenterteilung:
04.04.90 Patentblatt 90/14

(84) Benannte Vertragsstaaten:
DE FR IT NL SE

(56) Entgegenhaltungen:
DE-A-1 505 111
DE-A-3 037 722
FR-A-2 429 114
GB-A- 597 291

(73) Patentinhaber: ROBERT BOSCH GMBH
Postfach 50
D-7000 Stuttgart 1 (DE)

(72) Erfinder: SCHMIDT, Hans-Dieter
Kamenzer Strasse 8
D-8500 Nürnberg 60 (DE)
Erfinder: ALBERTER, Günther
Nordringstrasse 122
D-8500 Nürnberg (DE)
Erfinder: HETTICH, Gerhard
Holzgraben 30
D-8501 Rosstal (DE)

Courier Press, Leamington Spa, England.

**Beschreibung**

Die Erfindung richtet sich auf eine Vorrichtung nach dem Oberbegriff von Anspruch 1.

Eine derartige Vorrichtung ist z.B. aus der DE—PS—1 505 111 bekannt. Ein wesentlicher Nachteil dieser vorbekannten Vorrichtung liegt darin, daß es mit vertretbarem Aufwand nicht möglich ist, eine Vertauschung zwischen innen- und außenlaufendem Einzelrad vorzunehmen.

Hiervon ausgehend liegt der Erfindung die Aufgabe zugrunde, eine Vorrichtung der eingangs genannten Art so auszugestalten, daß eine solche Vertauschung problemlos möglich wird.

Diese Aufgabe wird gelöst durch die Merkmale von Anspruch 1.

Durch die erfindungsgemäße Anordnung der Signalgeber wird erreicht, daß ein Vertauschen möglich ist, ohne daß irgendein Eingriff in die erfindungsgemäße Vorrichtung vorgenommen wird. Hierdurch wird eine für die Praxis bedeutsame, erheblich vereinfachte Handhabung erreicht, so daß Funtionsfehler oder Beschädigungen im Zusammenhang mit einem Reifenwechsel oder Reifenaustausch vermieden werden.

Durch die Anordnung der ersten und zweiten Geber an jedem Einzelrad gemäß Anspruch 2 wird erreicht, daß die von dem Signalempfänger empfangenen Signale einen unterschiedlichen zeitlichen Abstand voneinander aufweisen, so daß über die Diskriminatoreinrichtung durch die Bestimmung der Zeit, welche bei dem Empfang eines Signals seit dem Empfang des vorhergehenden Signals verstrichen ist, eine Kennung möglich ist, welche eine Zuordnung des jeweiligen Signals zu dem Sensor des außenlaufenden oder innenlaufenden Rades ermöglicht.

Weitere Merkmale, Vorteile und Einzelheiten der Erfindung ergeben sich aus der folgenden Beschreibung einer bevorzugten Ausführungsform anhand der Zeichnung. Dabei ziegen

Fig. 1 eine teilweise Schnittdarstellung eines Zwillingsrades, welches an einer Kraftfahrzeugachse befestigt ist.

Fig. 2 eine schematische Darstellung der geometrischen Positionen der einzelnen Bauteile der erfindungsgemäßen Vorrichtung,

Fig. 3 ein Prinzipschaltbild der erfindungsgemäßen Vorrichtung, und

Fig. 4a und b Darstellungen der Signale zur Veranschaulichung der Signalunterscheidung zwischen den Sensoren der beiden Einzelräder.

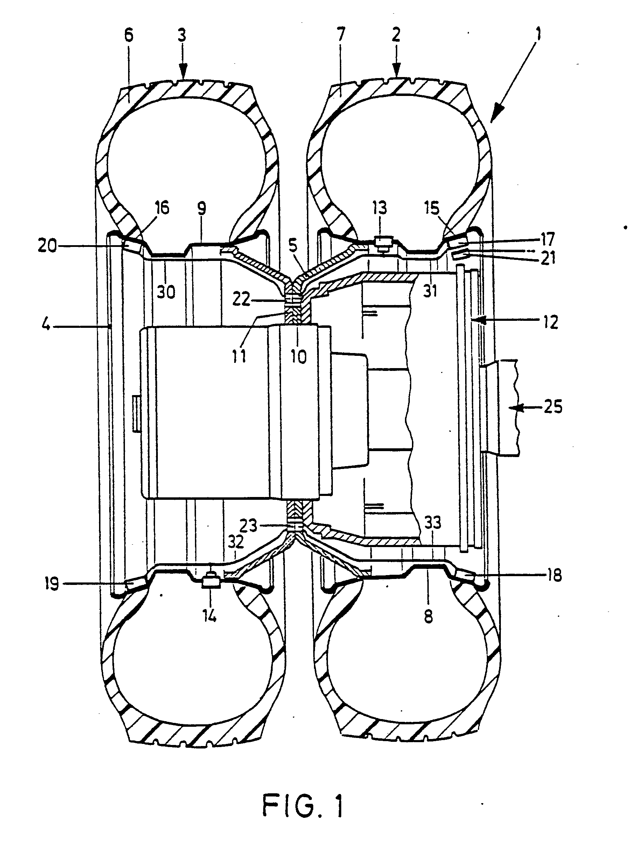

In Fig. 1 ist ein Zwillingsrad 1 dargestellt, welches zwei Einzelräder 2 und 3 umfaßt. Jedes Einzelrad 2 bzw. 3 besteht im wesentlichen aus einer Felge 4 bzw. 5 und einem auf diese aufgezogenen Reifen 6 bzw. 7.

Jede Felge 4, 5 weist einen etwa zylinderförmigen Topfmantel 8 bzw. 9 und einen Felgen-Topfboden 10 bzw. 11 auf. Die Felgen-Topfböden 10, 11 der untereinander gleichen Einzelräder 2, 3 liegen gegeneinander an und sind mittels durchgehender Schrauben gemeinsam mit einer Nabe 12 an einer Kraftfahrzeugachse 25 in bekannter Weise verbunden.

An jeder Felge 4, 5 ist ein Sensor 13 bzw. 14 zur Erfassung des Luftdrucks im Reifen 6 bzw. 78 angeordnet, welcher als luftdruckabhängiger Schwellwertschalter ausgebildet sein kann. Weiterhin sind an jeder Felge 4, 5 im Bereich von deren freiem Außenrand 15 bzw. 16 je zwei Signalgeber 17, 18 bzw. 19, 20 angeordnet. Dementsprechend rotieren diese Signalgeber 17 bis 20 zusammen mit den Rädern 2, 3. Den Signalgebern 17 bis 20 ist ein Signalempfänger 21 zugeordnet, welcher im Bereich der Achse 25 ortsfest angebracht ist. Im Bereich der Felgen-Topfböden 10 bzw. 11 sind Kopplungseinrichtungen 22 bzw. 23 angeordnet.

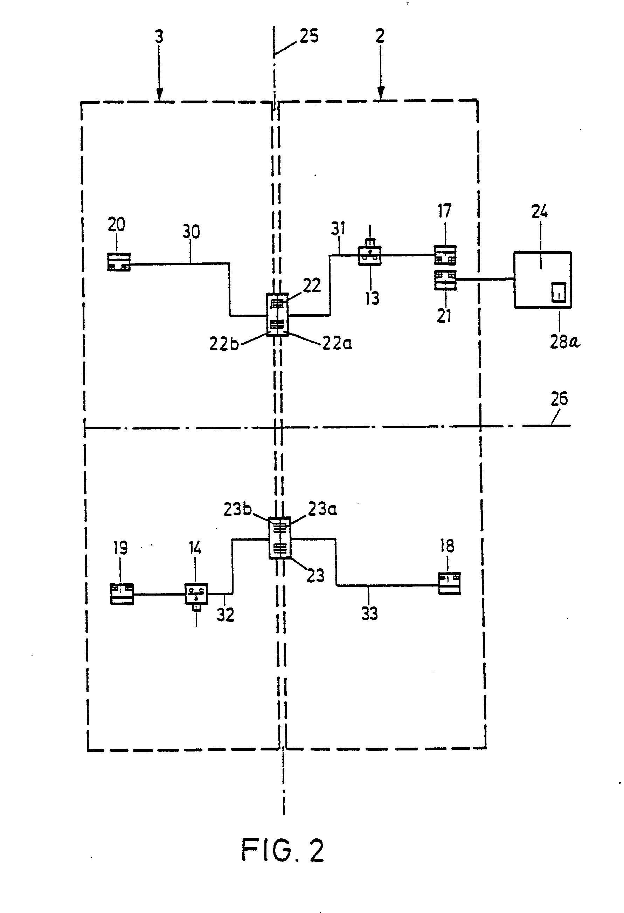

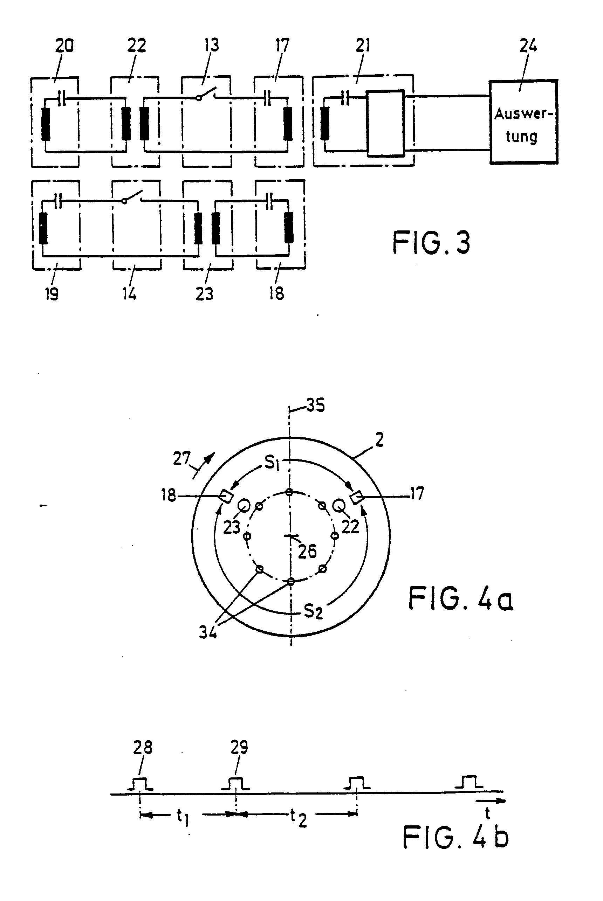

Wie insbesondere aus den Fig. 2 und 3 deutlich wird, ist der Signalgeber 20 über eine Koaxialleitung 30, die Kopplungseinrichtung 22 und eine Koaxialleitung 31 mit dem Sensor 13 und dem Signalgeber 17 verbunden, während der Signalgeber 19 mit dem Sensor 14 sowie über eine Koaxialleitung 32, die Kopplungseinrichtung 23 und eine Koaxialleitung 33 mit dem Signalgeber 18 verbunden ist. Dementsprechend empfängt der Signalempfänger 21, welchem eine Auswerteeinrichtung 24 nachgeordnet ist, abwechseld Signale des Sensors 13 bzw. des Sensors 14 und damit abwechselnd Signale entsprechend den Luftdruckverhältnissen in dem Rad 2 oder 3. Wie sich aus Fig. 3 ergibt, arbeiten die Signalgeber 17 bis 20 über eine an sich bekannte Schwingkreisankopplung (vgl. z.B. DE—OS—30 37 722).

Aufgrund der erfindungsgemäß erzielten, geometrischen Anordnung ist es problemlos möglich, die Räder 2, 3 derart zu vertauschen, daß jedes der beiden Räder außen bzw. innen laufen kann.

Aus Fig. 4 geht hervor, daß zur Ermöglichung einer getrennten Überwachung der beiden Räder 2 bzw. 3 vorgesehen ist, daß die Signalgeberanordnungen 17, 20 und 18, 19 relativ zu der Drehachse 26 so angeordnet sind, daß sit sich nicht genau gegenüberliegen, d.h. daß die Winkelabstände $S_1$ bzw. $S_2$ unterschiedlich sind. In Fig. 4a ist dies am Beispiel des Rades 2 veranschaulicht, wobei der Winkelabstand $S_1$ gesehen in Drehrichtung (Pfeil 27) zwischen dem Signalgeber 18 und 17 kleiner ist als der Winkelabstand $S_2$ zwischen dem Signalgeber 17 und 18. Dies führt dazu, daß der Signalempfänger 21, wie in Fig. 4b dargestellt, Signale 28 bzw. 29 mit unterschiedlichem zeitlichem Abstant $t_1$ bwz. $t_2$ empfängt, so daß mit Hilfe einer Diskriminatoreinrichtung 28a in der Auswerteeinrichtung 24 die Möglichkeit besteht, aufgrund des zeitlichen Abstandes eines gerade ausgewerteten Signals 28 bzw. 29 von dem jeweils vorhergehenden Signal zu bestimmen, ob dieses Signal von dem Signalgeber 17 bzw. 18 abgegeben wurde und damit entweder dem Sensor 13 oder dem Sensor 14 und dementsprechend dem Rad 2 oder dem Rad 3 zuzuordnen ist. Auf der gegenüberliegenden Fahrzeugseite ist die Signalfolge umgekehrt.

Wie in Fig. 2 schematisch dargestellt ist, bestehen die Kopplungseinrichtungen 22 und 23 jeweils aus HF-Wandlern, von denen an jeder Felge 4, 5 zwei einseitig offene Magnetkerne 22a, 23a bzw. 22b, 23b mit darin eingesetzten HF-Spulen in einem Winkelabstand zueinander befestigt sind. die Anordnung der Magnetkerne 22a, 22b, 23a, 23b ist derart, daß sie sich bei montierten Zwillingsrädern mit ihren offenen Stirnseiten gegenüberstehen. Um an den Kopplungseinrichtungen 22, 23 eine möglichst verlustfreie Übertragung der HF-Schwingung zu erreichen, ist es zweckmäßig, die Magnetkerne 22a, 22b, 23a, 23b als Topfkernwandler topfförmig auszubilden und im Topfboden 10, 11 der Felgen 4, 5 in entsprechende Bohrungen zu befestigen, so daß sie im montierten Zustand der Zwillingsräder mit ihren offenen Stirnseiten aneinanderliegen. Sollte eine solche Anordnung jedoch aus Platzgründen, insbesondere bei Verwendung einer Vielzahl von Befestigungsschrauben nicht möglich sein, so können die Kopplungseinrichtungen auch an den einander zugewandten Felgenrändern oder an den Randbereichen der Felgen-Topfböden 10, 11 derart befestigt sein, daß sie sich im montierten Zustand gegenüberstehen. Da bei den HF-Signalen von 1 MHz möglichst kurze Koaxialkabel erwünscht sind, ist es zweckmäßig, daß ebenso wie die Signalgeber 17, 18 bzw. 19, 20 eines jeden Rades 2, 3 auch die Kopplungseinrichtungen 22, 23 — wie Figur 4a zeigt — einen von 180° abweichenden Winkelabstand haben. Um auch in diesem Fall eine beliebige Vertauschung der einzelnen Räder 2, 3 zu gewährleisten, müssen auch die Befestigungslöcher 34 der Felge 4, 5 symmetrisch zu den Kopplungseinrichtungen 22, 23 angeordnet sein. Zur Verdeutlichung ist in Figur 4a zwischen den beiden Kopplungseinrichtungen 22 und 23 eine Symmetrieachse 35 dargestellt, zu der sowohl die Befestigungslöcher 34 als auch die Kopplungseinrichtungen 22, 23 symmetrisch angeordnet sind.

## Patentansprüche

1. Vorrichtung zur Übertragung von Meßsignalen, wie z.B. für den Reifendruck, an Zwillingsrädern (1) von Kraftfahrzeugen, welche durch zwei Einzelräder (2, 3) gebildet sind, deren Felgen-Topfböden (10, 11) aneinander anliegen, umfassend wenigstens einen mit dem zu übertragenden Signal abgebenden Sensor (13, 14) verbundenen, an jedem Rad (2, 3) angeordneten und mit diesem umlaufenden Signalgeber (17—20) und wenigstens einen ortsfest angeordneten Signalempfänger (21), dadurch gekennzeichnet, daß an jedem Einzelrad (2, 3) im Bereich des freien äußeren Felgenrandes (15, 16) wenigstens zwei Signalgeber (17, 18 bzw. 19, 20) derart angeordnet sind, daß der erste Signalgeber (17) des ersten Rades (2) mit dem Sensor (13) des ersten Rades (2) und dem Signalgeber (20) des zweiten Rades (3) sowie der zweite Signalgeber (18) des ersten Rades (2) mit dem Sensor (14) des zweiten Rades (3) und dem zweiten Signalgeber (19) des zweiten Rades (3) jeweils über an den Felgen (4, 5) angeordnete Kopplungseinrichtungen (22, 23) elektrisch verbunden sind, und daß im Bereich des freien äußeren Felgenrandes (15, bzw. 16) des jeweils innenlaufenden Einzelrades (2) im Abstand zu diesem der ortsfeste Signalempfänger (21) angeordnet ist.

2. Vorrichtung nach Anspruch 1, dadurch gekennzeichnet, daß die Signalgeber (17, 18 bzw. 19, 20) jedes Rades (2, 3) relativ zu der Drehachse (26) desselben derart winkelversetzt angeordnet sind, daß sie einen von 180° abweichenden Winkelabstand aufweisen.

3. Vorrichtung nach Anspruch 1, dadurch gekennzeichnet, daß die Kopplungseinrichtungen (22, 23) aus HF-Wandlern bestehen, von denen an jeder Felge (4, 5) zwei einseitig offene Magnetkerne (22a, 23a bzw. 22b, 23b) mit HF-Spulen in einem Winkelabstand derart befestigt sind, daß sich bei montierten Zwillingsrädern die Magnetkerne mit ihren offenen Stirnseiten gegenüberstehen.

4. Vorrichtung nach Anspruch 3, dadurch gekennzeichnet, daß Signalgeber (17, 20 bzw. 18, 19), Sensor (13 bzw. 23) und Kopplungseinrichtungen (22 bzw. 23) jeweils über ein Koaxialkabel (30, 31 bzw. 32, 33) miteinander verbunden sind.

5. Vorrichtung nach Anspruch 3, dadurch gekennzeichnet, daß die Magnetkerne (22a, 22b, 23a, 23b) im Topfboden (10, 11) der Felge (4, 5) befestigt sind.

6. Vorrichtung nach Anspruch 1, dadurch gekennzeichnet, daß die Kopplungseinrichtungen (22, 23) einen von 180° abweichenden Winkelabstand haben, wobei die Befestigungslöcher (34) der Felge (4, 5) symmetrisch zu den Kopplungseinrichtungen (22, 23) angeordnet sind.

## Revendications

1. Dispositif pour transmettre des signaux de mesure, comme par exemple pour la pression des pneumatiques, à des roues jumelées (1) de véhicules à moteur, qui sont constitués par deux roues individuelles (2, 3), dont les voiles (10, 11) des jantes s'appliquent l'un contre l'autre, ce dispositif comprenant au moins un émetteur de signaux (17—20) monté sur chaque roue (2, 3) et tournant avec celle-ci, et qui est relié au détectuer (13, 14) fournissant le signal à transmettre, et comprenant également au moins un récepteur de signaux (21) disposé en position fixe, dispositif caractérisé en ce que sur chaque roue individuelle (2, 3), dans la zone du bord de jante extérieur libre (15, 16) sont montés au moins deux émetteurs de signaux (17, 18 ou 19, 20) de telle manière, que le premier émetteur de signaux (17) de la première roue (2) est relié électriquement au détecteur (13) de cette première roue (2) et à l'émetteur de signaux (20) de la seconde roue (3), et que le second émetteur de signaux (18) de la première roue (2) est relié électriquement au détecteur (14) de la seconde roue (3) et au second émetteur de signaux (19) de cette seconde roue (3), chaque fois par l'intermédiaire des dispositifs de couplage (22, 23) montés sur les jantes (4, 5), et en ce que, dans la zone du bord de jante extérieur libre (15 ou 16) de la roue individuelle (2) roulant chaque fois à l'intérieur, le récepteur de signaux (21), fixe en position, est disposé à distance de cette roue.

2. Dispositif selon la revendication 1, caractérisé en ce que les émetteurs de signaux (17, 18 ou 19, 20) de chaque roue (2, 3) sont disposés décalés angulairement par rapport à l'axe de rotation (26) de cette roue de telle manière, qu'ils présentent un écart angulaire s'écartant de 180°.

3. Dispositif selon la revendication 1, caractérisé en ce que les dispositifs de couplage (22, 23) sont constitués par des convertisseurs à haute fréquence dont, sur chaque jante (4, 5), deux noyaux d'aimants (22a, 23a ou 22b, 23b) ouverts d'un côté sont fixés avec des bobines haute fréquence en présentant un écart angulaire de telle manière, que lorsque les roues jumelées sont montées, ces noyaux d'aimants se font face par leurs côtés frontaux ouverts.

4. Dispositif selon la revendication 3, caractérisé en ce que les émetteurs de signaux (17, 20 ou 18, 19), les détecteurs (13 et 14) et les dispositifs de couplage (22 et 23) sont reliés les uns aux autres chaque fois par l'intermédiaire d'un câble coaxial (30, 31 ou 32, 33).

5. Dispositif selon la revendication 3, caractérisé en ce que les noyaux d'aimants (22a, 22b, 23a, 23b) sont fixés dans les voiles (10, 11) des jantes (4, 5).

6. Dispositif selon la revendication 1, caractérisé en ce que les dispositifs de couplage (22, 23) présentent un écart angulaire s'écartant de 180°, les trous de fixation (34) des jantes (4, 5) étant disposés symétriquement par rapport aux dispositifs de couplage (22, 23).

**Claims**

1. Device for transmitting measurement signals, for example for the tyre pressure, to twin wheels (1) of motor vehicles formed by two individual wheels (2, 3), the rim flanges (10, 11) of which lie against one another, comprising at least one signal emitter (17—20) which is connected to the sensor (13, 14) emitting the signal to be transmitted, is arranged on each wheel (2, 3) and rotates with the latter, and at least one stationary signal receiver (21), characterized in that, in the region of the free outer rim edge (15, 16), at least two signal emitters (17, 18 or 19, 20) are arranged on each individual wheel (2, 3) in such a way that the first signal emitter (17) of the first wheel (2) is electrically connected to the sensor (13) of the first wheel (2) and to the signal emitter (20) of the second wheel (3), and the second signal emitter (18) of the first wheel (2) is electrically connected to the sensor (14) of the second wheel (3) and to the second signal emitter (19) of the second wheel (3), in each case via coupling systems (22, 23) arranged on the rims (4, 5), and in that the stationary signal receiver (21) is arranged in the region of the free outer rim edge (15 or 16) of the respective individual wheel (2) running on the inside, and at a distance to the latter.

2. Device according to Claim 1, characterized in that the signal emitters (17, 18 or 19, 20) of each wheel (2, 3) are arranged at an offset angle with respect to the axis of rotation (26) of the same in such a way that they have an angular distance deviating by 180°.

3. Device according to Claim 1, characterized in that the coupling systems (22, 23) consist of RF transducers, of which two magnet cores (22a, 23a or 22b, 23b), open at one side and with RF coils, are fastened on each rim (4, 5) at an angular distance in such a way that the open end faces of the magnet cores lie oposite one another when the twin wheels are mounted.

4. Device according to Claim 3, characterized in that signal emitters (17, 20 or 18, 19), sensor (13 or 14) and coupling systems (22 or 23) are connected to each other in each case via a coaxial cable (30, 31 or 32, 33).

5. Device according to Claim 3, characterized in that the magnet cores (22a, 22b, 23a, 23b) are fastened in the flange (10, 11) of the rim (4, 5).

6. Device according to Claim 1, characterized in that the coupling systems (22, 23) have an angular distance deviating by 180°, the fastening holes (34) of the rim (4, 5) being arranged symmetrical to the coupling systems (22, 23).

FIG. 1

FIG. 2

2

FIG. 3

FIG. 4a

FIG. 4b